# EUROPEAN PATENT APPLICATION

(11) **EP 4 755 552 A1**
(43) Date of publication of application: **10.06.2026**
(21) Application number: 24217616.2
(22) Date of filing: 04.12.2024
(51) Int. Cl.: B23B 1/00, B23B 27/16

(54) **METHOD FOR MACHINING A METAL WORKPIECE**

(71) Applicant: AB Sandvik Coromant, 811 81 Sandviken (SE)
(72) Inventor: WICKSTRÖM, David, 811 81 Sandviken (SE); LÖF, Ronnie, 811 81 Sandviken (SE); WIKBLAD, Krister, 811 81 SANDVIKEN (SE)
(74) Representative: Sandvik

(57) **Abstract**

The invention relates to a method for machining a surface of a metal workpiece (20) using a turning tool (10) comprising a tool body and first and second cutting inserts (1, 11) arranged at a front end (8) of the tool body, wherein the method comprises:
- an entering step (31) in which the turning tool (10) is moved along an entering path (L1) that is transverse to both a longitudinal direction (Z) and a radial direction (X), such that both the first cutting insert (1) and the second cutting insert (11) engage the workpiece and cut chips from a longitudinal portion (21) of the workpiece at entering angles of their respective active main cutting edges of 45°-120°; and
- a longitudinal turning step (32) in which the turning tool (10) is moved along the longitudinal direction (Z) such that the first and second cutting inserts (1, 11) cut chips from the longitudinal portion (21) at entering angles (E2) of their respective active main cutting edges of 10°- 45°.

## Description

### TECHNICAL FIELD

The invention relates to metal cutting, and in particular to turning operations wherein a turning tool is used for machining a rotating metal workpiece.

### BACKGROUND ART

Within the field of metal cutting, a turning tool may be used for machining the surface of a rotating metal workpiece. A cutting insert, for example made of cemented carbide or some other wear resistant material, is commonly arranged at the front of such turning tool.

Workpieces to be machined may come in various shapes. For example, a workpiece may have a generally longitudinal extension along the rotation axis thereof but also include one or more radial portions or "shoulders", i.e., portions of the workpiece extending in a radial direction (in a plane perpendicular to the rotation axis). It may be challenging to efficiently machine such workpieces, in particular in the vicinity of a corner formed at the transition between the radial portion and a longitudinal portion connected therewith. In other situations, it may be desirable to reduce the diameter of a cylindrical workpiece along only a part of the longitudinal extension of the workpiece, e.g., such that a shoulder is created. Creating such shoulder, and subsequently machining in the vicinity of such shoulder, may also be challenging.

In some applications it is desirable to remove a rather large volume of the workpiece. If the workpiece consists of a hard metal this is particularly time consuming and expensive. Larger cutting inserts are more expansive to produce and longer cutting edges being in cut generate broader chips, which is undesirable for many reasons.

Instead of having a larger cutting insert other approaches have been suggested wherein longitudinal external turning may be performed by a turning tool having more than one cutting insert cooperating during machining in a longitudinal feed direction. One such turning tool is disclosed in CN107838448A. The turning tool suggested in CN107838448A works in some applications. However, the turning tool is not particularly versatile, but designed for specific applications and feed directions and may not be satisfactory for some applications.

In particular, the prior art does not disclose any solutions of how to efficiently machine a workpiece along only a part of its longitudinal extension, e.g., a part extending from a shoulder of the workpiece, when using a turning tool with two or more cooperating cutting inserts.

Hence, there is a need for improved methods for turning, in particular when machining a workpiece including a shoulder or when machining a workpiece along only a portion of its longitudinal extension.

### SUMMARY

It is an object of the present invention to mitigate the shortcomings of the prior art and to provide a method for machining a workpiece using a turning tool that efficiently machines a longitudinal portion of the workpiece, in particular a longitudinal portion extending from a shoulder of the workpiece or a longitudinal portion that corresponds to only a part of the full longitudinal extension of the workpiece. Another object is to provide turning methods suitable for turning tools comprising two or more cooperating cutting inserts. Another object is to provide turning methods suitable for turning tools that includes strong cutting inserts with large nose angles.

Thus, according to a first aspect, the invention relates to a method for machining a surface of a metal workpiece using a turning tool, wherein the turning tool comprises a tool body having a longitudinal extension from a rear end to a front end thereof, and a first cutting insert and a second cutting insert, both arranged at the front end, wherein each of the first and the second cutting inserts includes a first cutting edge, a second cutting edge, and a convex nose cutting edge connecting the first and the second cutting edges. The second cutting insert is arranged beside the first cutting insert such that, with respect to the longitudinal extension of the tool body, a front point of the second cutting insert is located rearward of a front end, but forward of a rear end, of the second cutting edge of the first cutting insert. The metal workpiece rotates around a rotation axis extending along a longitudinal direction of the workpiece, wherein the metal workpiece comprises a longitudinal portion extending in the longitudinal direction. The method comprises the following machining steps in each of which either the first cutting edges or the second cutting edges of the first and second cutting inserts act as active main cutting edges:
- an entering step in which the turning tool is moved towards the rotation axis along an entering path that is transverse to both the longitudinal direction and a radial direction of the workpiece, such that both the first cutting insert and the second cutting insert engage the workpiece and cut chips from the longitudinal portion at entering angles of their respective active main cutting edges of 45°-120°; and
- a longitudinal turning step in which the turning tool is moved along the longitudinal direction such that the first and second cutting inserts cut chips from the longitudinal portion at entering angles of their respective active main cutting edges of 10°- 45°.

In recent years it has become increasingly popular to use turning tools engaging the workpiece at low entering angles. The inventors have found that longitudinal turning operations at low entering angles may be suitable when machining a longitudinal portion that corresponds to only a part of the full longitudinal extension of the workpiece, for example when machining a longitudinal portion extending from a shoulder of the workpiece, also when using turning tools comprising two or more cooperating cutting inserts. The inventors have found that a particularly efficient machining process may be obtained if using an entry into the material as defined herein.

Some types of cutting inserts and/or orientations of the cutting inserts when mounted in the turning tool body may be particularly well suited to be used in the method according to this disclosure. For example, cutting inserts of the positive type, that do not have to be tipped in with respect to the turning tool for obtaining clearance to the workpiece, could be used. Both the first and the second cutting inserts will engage the workpiece during at least a part of the entering step. However, the cutting inserts will not engage the workpiece at the same time, but rather sequentially, i.e., wherein the first cutting insert initially goes into cut and then, during a final phase of the entering step, also the second cutting insert goes into cut.

A front point of the second cutting insert should be understood as the point that is located, with respect to the longitudinal extension of the turning tool body, in front of any other point on the second cutting insert and is also the point of the second cutting insert that is located closest to the rotation axis of the workpiece when the turning tool is arranged for machining the workpiece.

Correspondingly, a front end and a rear end of the second cutting edge of the first cutting insert should be understood as the end points of the second cutting edge that are located, with respect to the longitudinal extension of the turning tool body, closest to the front end and the rear end, respectively, of the turning tool body.

The use of a turning tool having multiple cutting inserts arranged in this way will, in a cost effective way, provide the possibility to use a large cutting depth.

More specifically, with such arrangement, the second cutting edge of the second cutting insert can be seen as a continuation of the second cutting edge of the first cutting insert. Due to the convexly curved nose cutting edges and the required separation between the cutting inserts, the respective second cutting edges need to overlap to some extent in a direction along the longitudinal extension of the turning tool body. However, the combined length of the respective second cutting edges of the first and second cutting inserts, along the longitudinal extension of the turning tool body, will still be greater than the length of each individual second cutting edge, meaning that a greater cutting depth can be achieved.

According to some embodiments, different cutting edges of the respective first and second cutting inserts may be utilized in different machining operation steps, depending on the feed direction of the turning tool. In other words, the first cutting edges of the first and second cutting inserts may act as active main cutting edges in some machining operation steps, and the second cutting edges of the first and second cutting inserts may act as active main cutting edges in other machining operation steps. Thereby, the same cutting insert may be used for machining in a direction towards a first end of the longitudinal portion, for example when entering the workpiece material, and also when machining in a direction towards a second end of the longitudinal portion, for example in the subsequent longitudinal turning operation at a low entering angle. Significant portions of the available cutting edges of the tool, including portions of the first cutting edges as well as portions of the second cutting edges, may be engaged in cutting chips from the workpiece, providing an effective overall utilization of the cutting insert. Hence, according to some embodiments, the respective first cutting edges of the first and second cutting inserts may act as active main cutting edges in the entering step, and the respective second cutting edges of the first and second cutting inserts may act as active main cutting edges in the longitudinal turning step.

An "entering angle" as used herein should be understood as the angle between the feed direction and the cutting edge. A "low" or "small" entering angle as used herein refers to an entering angle below 45°.

A radial direction of the workpiece is to be understood as a direction extending radially with respect to the rotation axis of the workpiece.

The method may be particularly beneficial when used with cutting inserts having a relatively large nose angle (the angle between the first cutting edge and the second cutting edge in a top view of the cutting insert), such as within a range of 70° - 110°. For example, such nose angle makes it easy to perform efficient entry into the workpiece material using the first cutting edge during the entering step, and longitudinal turning using the second cutting edge at a low entering angle. A further advantage is that such cutting inserts are strong and robust.

The first cutting edge and the second cutting edge are preferably straight in a top view of the cutting inserts. Consequently, the entering angle along these cutting edges does not change.

Each of the first and second cutting inserts may be an indexable cutting insert including one or more additional sets of first, second, and nose cutting edges, such that different sets of cutting edges can be positioned in operational or non-operational positions depending on how the cutting inserts are mounted in the insert seat.

The entering angle of the active main cutting edge during the entering step may be relatively close to 90°, for example within a range of 60°-120°. The inventors have found that such entering angle will often result in chips that are easy to handle. The chip control, and thus the reliability of the cutting process, is thereby improved. Moreover, the wear on the cutting insert will be reduced. The entering angle of the active main cutting edge during the entering step may for example be in a range of 70° - 110°, or in a range of 80°- 100°. However, it is also envisaged that a smaller entering angle, for example as small as 45°, is used in the entering step.

In each of the machining steps according to the method described herein, the nose cutting edge connecting the first and second cutting edge will engage the workpiece and cut chips therefrom. The nose cutting edge is the part that generates the machined surface. For some types of cutting inserts, for example cutting inserts with a nose cutting edge having a considerable extension (big radius), it is envisaged (although usually not preferred in order to obtain a beneficial chip formation) that *only* the nose cutting edge is engaged in cutting during some of the machining steps discussed herein. In other words, the active main cutting edge is not necessarily engaged in cutting chips from the workpiece in each machining step but is nevertheless oriented with respect to the workpiece such that the cutting edges *would* form entering angles as defined herein if engaging the workpiece. The entering angle along the nose cutting edge obviously vary due to the convex curvature thereof, but it will be similar to the entering angle of the active main cutting edge at least in the vicinity thereof.

During the entering step, for each of the first and second cutting inserts, simultaneous cutting with both the first cutting edge and the second cutting edge, i.e., wherein both the first cutting edge and the second cutting edge are in cut at the same time, should normally be avoided for achieving a reliable cutting process with beneficial chip formation and manageable cutting forces. Therefore, the entering path is preferably not too steep (in relation to the rotation axis) such that only the nose cutting edges and the active main cutting edges cut chips from the longitudinal portion during the entering step. Thus, according to some embodiments, the longitudinal component of the entering path is greater than the radial component thereof, for example greater to an extent that the non-active main cutting edges of the cutting inserts do not engage the workpiece during the entering step.

According to some embodiments, the entering path is a straight line. Such straight line may form an angle of 5° - 80° to the longitudinal direction. According to some embodiments, such straight line forms an angle of 5° - 45° to the longitudinal direction.

The angle formed to the longitudinal direction by the straight line defining the entering path may be equal to, or less than, the entering angle of the active main cutting edges in the longitudinal turning step. This may be particularly advantageous in view of embodiments where the first cutting edges act as active main cutting edges in the entering step and the second cutting edges act as active main cutting edges in the longitudinal turning step since such angle will ensure that the second cutting edges of the first and second cutting inserts do not engage the longitudinal portion during the entering step.

An entering path in the form of a straight line that forms an angle to the longitudinal direction that is equal to, or substantially equal to, the entering angle of the active main cutting edges in the longitudinal turning step may provide a particularly efficient (steep) entry into the longitudinal portion of the workpiece. However, in some cases a less steep entry into the workpiece may be preferred.

A movement along a straight line in the entering step may be advantageous from a chip formation perspective and would usually be the most effective path for entering the longitudinal portion of the workpiece. Nevertheless, it is also envisaged that the entering path may be curved, for example extending along an arc of a circle, for the whole of, or a part of, the entering path. In any case, the entering angle of the active main cutting edge will be in a range of 45°-120° along at least a part of, and preferably along more than half of the entering path. For example, according to some embodiments, irrespective of whether the entering path is straight or (partly) curved, the entering angle of the active main cutting edge may be in a range of 45°-120° along the whole extension of the entering path.

The method described hereinabove may be repeated to remove more material from the longitudinal portion of the workpiece in multiple cuts.

According to some embodiments, the entering angle of the active main cutting edge of the second cutting insert is the same as the entering angle of the active main cutting edge of the first cutting insert in the longitudinal turning step.

According to some embodiments, the entering angle of the active main cutting edge of the second cutting insert is the same as the entering angle of the active main cutting edge of the first cutting insert in the entering step.

According to some embodiments, the method described herein is adapted for efficient cutting close to a shoulder of a workpiece.

Hence, the metal workpiece may comprise a radial portion extending in the radial direction, and a corner portion connecting the longitudinal portion and the radial portion.

According to some embodiments, the movement of the turning tool in the entering step may be towards the rotation axis and towards the radial portion.

A movement of the turning tool towards such radial portion corresponds to a movement resulting in that the turning tool, and particularly the first and second cutting inserts, approach a plane in which the radial portion extends. Hence, when moving the turning tool in a direction that is both towards the radial portion and towards the rotation axis, the cutting inserts approaches the rotation axis and the plane in which the radial portion extends.

With such method, the entering step preceding the longitudinal turning step may involve cutting chips from a region of the longitudinal portion in the immediate vicinity of a corner portion that connects the longitudinal portion and a radial portion (a shoulder).

Such corner portion is usually not a completely abrupt transition from the radial portion to the longitudinal portion but rather formed by a radius or curved portion, forming a smooth (or at least extended) transition between the radial portion and the longitudinal portion. In particular, if the corner portion is formed by a forging process, the corner portion may be irregular and also have an extension that is significant.

In the entering step, at least a part of such corner portion may be engaged by the first cutting insert. Thus, according to some embodiments, the entering step comprises cutting chips from at least a part of the corner portion.

According to another aspect, the invention relates to a system comprising a computer numerical controlled (CNC) machine tool including a turning tool for machining a metal workpiece, wherein the system further comprises processing circuitry and a memory and is configured to perform the method according to any of the embodiments described herein.

The CNC machine tool may be any machine tool that can be used for turning a metal work piece, and where the motion of the machine, such as tool path, depth of cut, feed rate, cutting speed and revolutions per time unit, is or can be controlled by a computer.

The processing circuitry and memory may be intrinsic parts of the CNC machine tool, e.g., comprised in the built-in controller of the CNC machine tool. Alternatively, or in combination, an external processing circuitry and memory may be in communicational contact with the CNC machine tool. The processing circuitry is configured to control the CNC machine tool, and thus the movement of the turning tool.

The processing circuitry may comprise one or more programmable processors, application-specific integrated circuits, field programmable gate arrays or combinations of these adapted to execute instructions. The memory may contain instructions executable by said processing circuitry, whereby the CNC machine tool is operative for machining the workpiece.

The instructions executable by the processing circuitry may be arranged as a numerical control program, for example stored in the memory. The numerical control program may comprise computer readable code means, which when executed by the processing circuitry causes the system and the CNC machine tool to perform the method according to any of the embodiments described herein.

The numerical control program may be carried by a computer readable storage medium connectable to the processing circuitry, such as the memory. The memory may be realized as for example a RAM (Random-access memory), ROM (Read-Only Memory) or an EEPROM (Electrical Erasable Programmable ROM). Further, the numerical control program may be carried by a separate computer-readable medium, such as a CD, DVD or flash memory, from which the program could be downloaded into the memory. Alternatively, the numerical control program may be stored on a server or any other entity connected to which the system has access. The numerical control program may then be downloaded from the server into the memory.

According to another aspect, the invention relates to a computer program for generating, based on input comprising information about a turning tool and dimensions of a metal workpiece to be machined, the numerical control program according to any of the embodiments described herein.

Such computer program may for example be a computer program for Computer Aided Manufacturing (CAM) such as a CAD/CAM computer program in which CAD models of the turning tool and workpiece, together with a model of the component to be machined, is used as input to a tool path generating process performed in the CAD/CAM computer program, wherein such computer program for this purpose includes specific modules or functions for generating tool paths in accordance with the machining methods of any of the embodiments described herein, i.e., wherein preferred tool path sequences corresponding to the method steps disclosed in any of the embodiments described herein are stored in such computer program, to be adapted to the specific turning tool properties and workpiece characteristics according to the input.

### BRIEF DESCRIPTION OF DRAWINGS

The solution will now be described in more detail by means of exemplary embodiments and with reference to the accompanying drawings, in which:
Fig. 1 illustrates a system comprising a CNC machine tool and a turning tool for machining a workpiece, wherein the figure also includes an enlarged view of the turning tool machining the workpiece.
Fig. 2 is another view of the turning tool.
Fig. 3 is a perspective view of a cutting insert that is utilized as first and second cutting inserts according to embodiments of the method.
Fig. 4A - 4C illustrate steps of a method according to an embodiment.
Fig. 5A - 5C illustrate steps of a method according to another embodiment.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

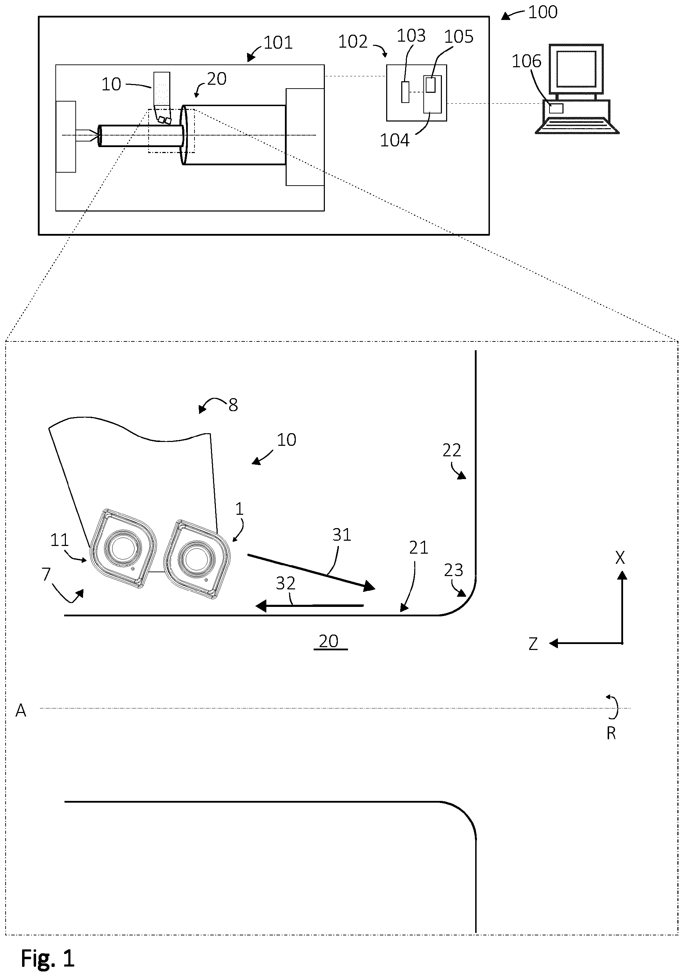

Fig. 1 shows a system 100 according to the invention that comprises a CNC machine tool 101, schematically illustrated in Fig. 1 as including a turning tool 10 and a workpiece 20 to be machined. The system 100 further comprises a controller 102 for controlling the cutting process, which controller may be an integral part of the CNC machine tool 101. The CNC machine tool 101 may for example be a CNC lathe or any other machine tool which can be used for turning a metal work piece and is controlled by a computer. The controller 102 comprises processing circuitry 103 and a memory 104 in which a numerical control program 105 is stored. The controller 101 is communicationally coupled to the CNC machine tool 101 for control thereof.

Fig. 1 also shows a computer comprising a computer program 106 that can be used for generating the numerical control program 105, at least partly based on input regarding the characteristics of the turning tool 10 and the workpiece 20. The numerical control program 105 obtained from the use of the computer program 106 is loaded into the memory 104.

When the numerical control program 105 is executed by the processing circuitry 103, the controller is configured to control the CNC machine tool 101, including the turning tool 10, to perform a method for machining the rotating workpiece 20, which method will be described in further detail below.

The enlarged portion in Fig. 1 illustrates a part of the workpiece 20 including a longitudinal portion 21 extending parallel with the rotation axis A along a longitudinal direction Z, a radial portion (shoulder) 22 extending in a direction perpendicular to the rotation axis A in a radial direction X, and a corner portion 23 connecting the shoulder 22 and the longitudinal portion 21.

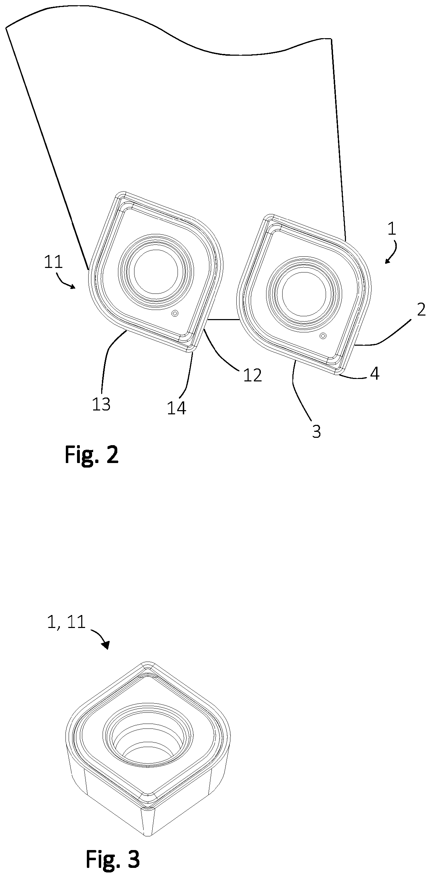

The turning tool 10 includes a tool body having a longitudinal extension from a rear end 8 to a front end 7 thereof. A first cutting insert 1 and a second cutting insert 11 are arranged at the front end 7. In the illustrated embodiment, the first and the second cutting inserts 1, 11 are identical. Fig. 3 is a perspective view of such cutting insert. As indicated in Fig. 2, each of the first and the second cutting inserts 1, 11, comprises a first cutting edge 2, 12, a second cutting edge 3, 13, and a nose cutting edge 4, 14 connecting the first cutting edge 2, 12 and the second cutting edge 3, 13. Each of the cutting inserts 1, 11 is indexable and comprises two such sets of cutting edges. In Fig. 2, only the cutting edges currently arranged as operational are denoted by reference numerals.

In the illustrated embodiment, the nose angles between the respective first and second cutting edges are 90°.

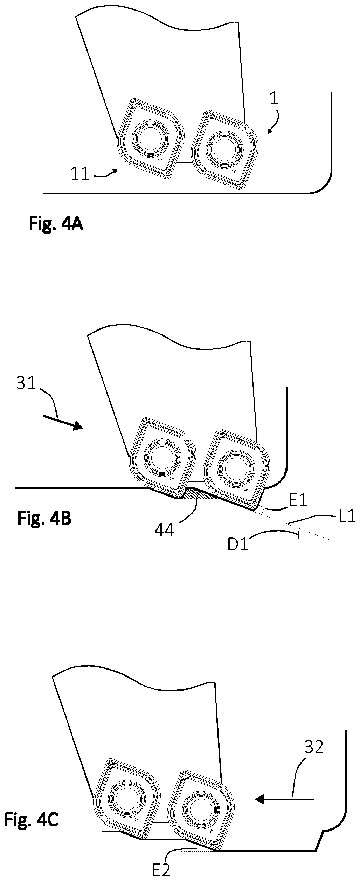

The method, indicated by arrows 31, 32 in Fig. 1 and illustrated in more detail in Figs. 4A-4C, begins with an entering step 31 in which the turning tool 10 is moved towards the radial portion 22 and the rotation axis A along an entering path L1 that is transverse to both the longitudinal direction Z and the radial direction X such that the first and second cutting inserts 1, 11 cut chips from the longitudinal portion 21 of the metal workpiece 20 with the respective first cutting edges 2, 12 acting as active main cutting edges.

The entering path L1 illustrated in Fig. 4B, in this case corresponding to a straight line forming an angle D1 of approximately 20° to the longitudinal direction Z, results in an entering angle E1 of the first cutting edge 2 of the first cutting insert 1. In the illustrated embodiment, the entering angle E1 is approximately 90° during the entering step 31. The second cutting insert 11 has a similar orientation with respect to the tool body as the first cutting insert 1, and, consequently, the entering angle of the first cutting edge 12 of the second cutting insert 11 is also approximately 90°.

Following the entering step 31, the turning tool 10 is moved in a longitudinal turning step 32 along the longitudinal direction Z away from the radial portion 22 such that the first and second cutting inserts 1, 11 cut chips from the longitudinal portion 21 of the metal workpiece 20 with the respective second cutting edges 3, 13 acting as active main cutting edges. Fig. 4C illustrates the entering angle E2 of the second cutting edge 3 of the first cutting insert 1. In the illustrated embodiment, the entering angle E2 is approximately 20° during the longitudinal turning step 32. The entering angle of the second cutting edge 13 of the second cutting insert 11 is also approximately 20°.

In the beginning of the longitudinal turning step 32 illustrated in Fig. 4C, the first cutting insert 1 will have to pass through a small region of additional uncut material 44 (indicated in Fig. 4B), which is not favorable and would not be feasible in the long run but is acceptable due to the small size of such region of additional material 44.

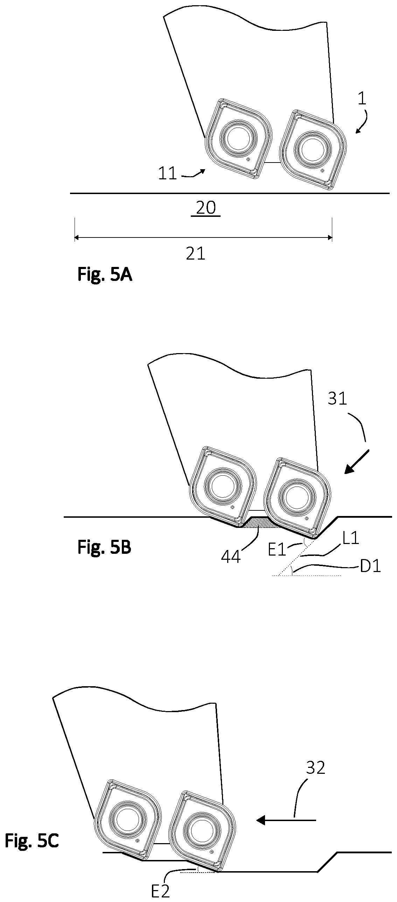

Figs. 5A-5C illustrate another embodiment of the method wherein a similar turning tool 10 is used. In this embodiment, the workpiece does not include any radial portion but just a longitudinal portion 21 to be machined that corresponds to only a part of the total longitudinal extension of the workpiece 20. Moreover, the entry into the workpiece is different. In this embodiment, the respective second cutting edges 3, 13 act as active main cutting edges both in the entering step 31 and in the longitudinal turning step 32. Hence, the first cutting edges 2, 12 are not employed for cutting in this embodiment.

In the entering step 31, illustrated in Fig. 5B, the turning tool is moved along an entering path L1 that forms an angle D1 of approximately 45° to the longitudinal direction. In the illustrated embodiment, this will result in an entering angle E1 of the second cutting edges 3, 13 of approximately 65°. Accordingly, a slightly smaller entering angle E1 is used for the entering step 31 compared to the entering angle used in the embodiment illustrated in Fig. 4B. Such smaller entering angle may be beneficial in this case, partly due to the large radiused nose portion that follows the second cutting edge 2 of the first cutting insert 1 and that to some extent engages the workpiece, as seen in Fig. 5B. Along this curved edge, the entering angle will vary (increase) and may become too large at some point if not a relatively small entering angle E1 of the second cutting edge is used (e.g., slightly smaller than 90°).

In the subsequent longitudinal turning step 32, illustrated in Fig. 5C, the entering angle E2 of the respective second cutting edges 3, 13 is approximately 20°.

Similar to the previously described embodiment, the first cutting insert 1 will have to pass through a region of additional uncut material 44 in the longitudinal turning step 32. This is acceptable due to the small size of such region 44.

In all the figures, the method steps 31 and 32 are illustrated by arrows indicating the corresponding feed directions, i.e., the directions in which the turning tool 10 is moved in relation to the rotating workpiece 20.

## Claims

1. A method for machining a surface of a metal workpiece (20) using a turning tool (10), wherein the turning tool comprises a tool body having a longitudinal extension from a rear end (7) to a front end (8) thereof, and a first cutting insert (1) and a second cutting insert (11), both arranged at the front end (8), wherein each of the first and the second cutting inserts includes:
- a first cutting edge (2, 12),
- a second cutting edge (3, 13), and
- a convex nose cutting edge (4, 14) connecting the first and the second cutting edges,
and wherein the second cutting insert (11) is arranged beside the first cutting insert (1) such that, with respect to the longitudinal extension of the tool body, a front point of the second cutting insert is located rearward of a front end, but forward of a rear end, of the second cutting edge (3) of the first cutting insert, and wherein the metal workpiece (20) rotates around a rotation axis (A) extending along a longitudinal direction (Z) of the workpiece, wherein the metal workpiece (20) comprises a longitudinal portion (21) extending in the longitudinal direction (Z), wherein the method comprises the following machining steps in each of which either the first cutting edges or the second cutting edges of the first and second cutting inserts act as active main cutting edges:
- an entering step (31) in which the turning tool (10) is moved towards the rotation axis (A) along an entering path (L1) that is transverse to both the longitudinal direction (Z) and a radial direction (X) of the workpiece, such that both the first cutting insert (1) and the second cutting insert (11) engage the workpiece and cut chips from the longitudinal portion (21) at entering angles (E1) of their respective active main cutting edges of 45°-120°; and
- a longitudinal turning step (32) in which the turning tool (10) is moved along the longitudinal direction (Z) such that the first and second cutting inserts (1, 11) cut chips from the longitudinal portion (21) at entering angles (E2) of their respective active main cutting edges of 10°- 45°.

2. The method according to claim 1, wherein the entering angles of the respective active main cutting edges of the first and second cutting inserts in the entering step (31) is in the range 80°- 100°.

3. The method according to any of the previous claims, wherein, in the entering step (31), the respective first cutting edges (2, 12) of the first and second cutting inserts (1, 11) act as active main cutting edges, and, in the longitudinal turning step (32), the respective second cutting edges (3, 13) of the first and second cutting inserts (1, 11) act as active main cutting edges.

4. The method according to claim 3, wherein the entering path (L1) is a straight line that forms a first angle (D1) of 5° - 45° to the longitudinal direction (Z).

5. The method according to claim 4, wherein the first angle (D1) is equal to, or less than, the entering angles of the active main cutting edges in the longitudinal turning step (32).

6. The method according to any of the previous claims, wherein, in the longitudinal turning step (32), the entering angle of the active main cutting edge of the second cutting insert (11) is the same as the entering angle (E2) of the active main cutting edge of the first cutting insert (1).

7. The method according to any of the previous claims, wherein, in the entering step (31), the entering angle of the active main cutting edge of the second cutting insert (11) is the same as the entering angle (E1) of the active main cutting edge of the first cutting insert (1).

8. The method according to any of the previous claims, wherein the metal workpiece (20) further comprises:
- a radial portion (22) extending in the radial direction (X), and
- a corner portion (23) connecting the longitudinal portion (21) and the radial portion (22),
and wherein, in the entering step, the movement of the turning tool is towards the rotation axis (A) and towards the radial portion (22).

9. The method according to claim 8, wherein the entering step (31) comprises cutting chips from at least a part of the corner portion (23).

10. A system (100) comprising a computer numerical controlled machine tool (101) including a turning tool (10) for machining a metal workpiece (20), wherein the system further comprises processing circuitry (103) and a memory (104) and is configured to perform the method according to any of the claims 1-9.

11. A numerical control program (105), comprising computer readable code means to be executed by the processing circuitry (103) of the system (100) according to claim 10, which computer readable code means when executed causes the system to perform the method according to any of the claims 1-9.

12. A computer program (106) for generating, based on input comprising information about a turning tool and dimensions of a metal workpiece to be machined, the numerical control program (105) according to claim 11.
